(19)

Europäisches
Patentamt
European
Patent Office
Office européen
des brevets

(11) **EP 4 354 247 B1**

(12) **EUROPEAN PATENT SPECIFICATION**

(45) Date of publication and mention
of the grant of the patent:
**23.04.2025 Bulletin 2025/17**

(21) Application number: **22918129.2**

(22) Date of filing: **14.06.2022**

(51) International Patent Classification (IPC):
*G05D 1/00* (2024.01)     *G05D 1/245* (2024.01)
*G05D 1/678* (2024.01)     *G05D 105/10* (2024.01)
*G05D 107/00* (2024.01)     *G05D 109/15* (2024.01)
*G05D 111/50* (2024.01)     *G05D 1/648* (2024.01)

(52) Cooperative Patent Classification (CPC):
**G05D 1/648; G05D 1/245; G05D 1/678;**
G05D 2105/10; G05D 2107/95; G05D 2109/15;
G05D 2111/52; G05D 2111/54

(86) International application number:
**PCT/CN2022/098581**

(87) International publication number:
**WO 2023/130673 (13.07.2023 Gazette 2023/28)**

(54) **PATH PLANNING METHOD FOR WALL-CLIMBING ROBOT**

WEGPLANUNGSVERFAHREN FÜR EINEN WANDKLETTERROBOTER

PROCÉDÉ DE PLANIFICATION DE TRAJET DE ROBOT D'ESCALADE DE PAROI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.01.2022 CN 202210000699**

(43) Date of publication of application:
**17.04.2024 Bulletin 2024/16**

(73) Proprietor: **Beijing Timeriver Technology Co., Ltd.
Beijing 102402 (CN)**

(72) Inventors:
• **XU, Huayang**
**Beijing 102402 (CN)**
• **REN, Luchang**
**Beijing 102402 (CN)**
• **SONG, Zhangjun**
**Beijing 102402 (CN)**
• **LIU, Hailong**
**Beijing 102402 (CN)**
• **ZHANG, Guoqing**
**Beijing 102402 (CN)**
• **LIU, Yanyu**
**Beijing 102402 (CN)**
• **GUO, Chaoqiong**
**Beijing 102402 (CN)**

(74) Representative: **Ipside**
**7-9 Allée Haussmann**
**33300 Bordeaux Cedex (FR)**

(56) References cited:
WO-A1-2019/024739    CN-A- 108 413 976
CN-A- 110 667 719    CN-A- 113 844 221
CN-A- 114 019 986    CN-U- 203 019 367
CN-U- 204 772 513    US-A1- 2010 030 378
US-A1- 2013 024 067    US-A1- 2017 123 435

**Description**

**Technical Field**

The present application relates to the technical field of wall-climbing robots, and in particular to a path planning method for a wall-climbing robot.

**Background of the Invention**

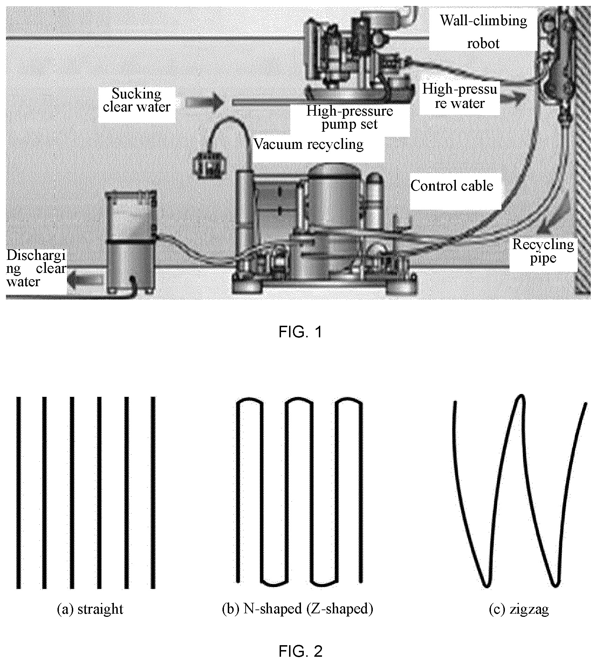

A wall-climbing robot has characteristics of a large load and a heavy body, and often needs to be externally connected with some devices during working. FIG. 1 is a schematic diagram illustrating a working principle of a robot system. For example, a main operation mode of a ship derusting robot is to be safely and reliably adsorbed to a surface of a ship for a derusting operation with a high-pressure water jet module carried. Meanwhile, since this technology is integrated with wall climbing, derusting and recycling, the ship derusting robot needs to carry a high-pressure water pipe, a vacuum recycling pipe and a cable to operate.

FIG. 2 is a schematic diagram illustrating several types of movement path planning for a wall-climbing robot. At present, path planning for the wall-climbing robot mainly includes: straight, N-shaped (Z-shaped) and zigzag path planning. A straight crawling trajectory is low in efficiency, the robot can only travel in a straight direction, but cannot crawl back and forth, and for the wall-climbing derusting robot to derust, it will lead to poor consistency at a connection part of a derusting portion and affect the overall derusting quality. Operation with an N-shaped (Z-shaped) trajectory also has the consistency problem at the connection part of the derusting portion, and when the robot operates according to the N-shaped (Z-shaped) trajectory, the robot needs to carry out a large-scale steering operation, so that the efficiency is reduced and high steering performance of the robot needs to be ensured. Although the derusting portion of a zigzag crawling trajectory has a certain overlapping region, the overall derusting quality is good and the derusting efficiency is high.

Due to complex working conditions of a wall surface of the ship, existing path planning solutions for the robot are basically semi-automated operation, that is, in the N-shaped (Z-shaped) path planning, the lane changing action needs manual operation. Meanwhile, when the wall-climbing robot is adsorbed to the wall surface of the ship and travels, the wall-climbing robot will slide down along the wall surface of the ship under the action of the gravity of the robot itself, the gravity of the high-pressure water pipe and the gravity of the recycling pipe. Especially when the wall-climbing robot travels in a horizontal direction, the robot undergoes a serious tail falling phenomenon, that is, after the robot travels for a period of time, the whole robot will shift downwards for a certain distance, resulting that the robot is unable to operate according to a previously planned path.

When the wall-climbing robot operates vertically along the wall surface of the ship, with the increase of a climbing height of the robot, the pipe to be dragged correspondingly becomes longer, the gravity of the pipe will increase, and the mass of the load of the robot and a position of its center of gravity will change, resulting in a certain angle deviation of the robot. With the increase of the distance, the deviation value will gradually increase, and manual adjustment is required. The lane changing action tests the experience of operators, and the lane changing distance cannot ensure consistency. If the lane changing distance is too small, an overlapping area is caused to be too large and the efficiency is low; and if the lane changing distance is too large, repair missing regions are caused and need to be repaired, and the operation efficiency is reduced.

The US20100030378 A1 patent document discloses a multi-functional wall climbing robot designed to navigate and perform tasks on vertical and ceiling surfaces of an indoor space. The robot employs an IGPS, which consists of navigation transmitters emitting rotating fan beams and a navigation receiver that recognizes these beams as IGPS signals. A mobile controller installed on the robot's frame processes these signals to determine the robot's position and control its movement via a drive mechanism.

The US20130024067A1 patent document discloses a ground vehicle capable of holonomic motion, which allows it to move in any direction while carrying tools such as sensors for non-destructive inspection. The vehicle features a frame with four or more Mecanum wheels, each driven by an independently controlled motor, and a plurality of suction devices to maintain precise control on non-level surfaces.

The CN204772513U patent document discloses a multi-functional robot specifically engineered for performing various tasks on the facades of boats and ships. The robot employs magnetic materials to adhere to the vessel's surfaces and features a crawler-type structure for adaptable contact. It is equipped with a stable servo motor system to ensure smooth movement and a rotating operating platform that can accommodate a range of working tools, such as spray guns, welding guns, and cutters.

The related art only considers the operation in a vertical mode and never considers the operation in a horizontal mode. When the wall-climbing robot performs horizontal operation along the wall surface of the ship, the robot will undergo the tail falling phenomenon due to the influence of the gravity of the robot itself and the load, and the above problems will be more serious.

## Summary of the Invention

The invention is set out in the appended set of claims. In order to solve the above technical problems, the present application provides a path planning method for a wall-climbing robot. The present disclosure mainly solves the problems of path planning, vertical face straight walking and automatic lane changing of the robot, and the robot implements automated operation according to the path planning, vertical face straight walking and automatic lane changing, so that people are freed from frequently operating a remote controller and performing real-time monitoring, and the robot is more intelligent. With the adoption of this solution, the functions of vertical face straight walking and automatic lane changing of the wall-climbing robot are realized, so that a whole robot system is more automatic and the work efficiency is improved.

The technical solution adopted in the present application is as follows.

A path planning method for a wall-climbing robot includes following steps:

step 1, establishing a spatial pose model of a wall-climbing robot during a working process;
step 2, performing statics analysis on the wall-climbing robot, and decomposing a resultant force G of gravity of the wall-climbing robot itself and gravity of a load borne by the wall-climbing robot;
step 3, performing kinetics analysis on the wall-climbing robot, and analyzing a crawling capability and a steering capability of the wall-climbing robot; and
step 4, performing path planning according to analysis results of the crawling capability and the steering capability.

Further, the analyzing the crawling capability of the wall-climbing robot in step 3 specifically includes: dividing crawling movement modes of the wall-climbing robot on a wall surface of a ship into a vertical mode and a horizontal mode.

Further, the vertical mode includes vertical upward movement and vertical downward movement, the wall-climbing robot in the vertical upward movement needs to overcome a resistance moment caused by the gravity of a body and the gravity of the load of the robot and a resistance moment caused by friction of wheel sets, and when a speed is constant, a resistance moment of the wall-climbing robot in the vertical upward movement is greater than a resistance moment in the downward movement.

Further, the vertical mode is implemented by following steps:

step 301, manually adjusting the wall-climbing robot to a vertical posture, and recording a current feedback angle $\alpha$ of an inertial measurement unit module; and
step 302, setting a walking distance and a lane changing distance of the wall-climbing robot, and starting, by the wall-climbing robot, automated operation according to the current feedback angle, with a completed operation area being S*L*N, where S represents the walking distance, L represents the set lane changing distance, and N represents a number of lane changing.

Further, the horizontal mode includes horizontal forward movement and horizontal backward movement, and in horizontal movement of the wall-climbing robot, the wall-climbing robot needs to overcome the resistance moment caused by the gravity of the body and the gravity of the load of the wall-climbing robot and the resistance moment caused by the friction of the wheel sets.

Further, in the horizontal mode, due to an influence of gravity $G_Z$, an upward force $F_Z$ is needed for compensation; and

in the horizontal mode, a force balance equation of the wall-climbing robot is as follows:

$$\begin{cases} F_z = G_z = Q \sin \alpha \\ F_x = Q \cos \alpha \\ Q = F - M \end{cases}$$

where Q represents a resultant force of a driving force and a friction force when the robot moves forward, $F_Z$ represents a component of the resultant force in a z axis direction, $F_X$ represents a component of the resultant force in an x axis direction, and $\alpha$ is a set offset angle.

Further, the horizontal mode is technically implemented by following steps:

step 301', manually adjusting the wall-climbing robot to a horizontal posture, and recording a current feedback angle

$\alpha_1$ of the inertial measurement unit module;

step 302', allowing the wall-climbing robot to move forward the set walking distance S, and recording a current feedback angle $\alpha_2$ of the inertial measurement unit module;

step 303', calculating a difference between the two angles $\alpha_f = \alpha_2 - \alpha_1$, and taking $\alpha_f$ as an offset angle set for the wall-climbing robot moving forward the distance S;

step 304', manually adjusting the wall-climbing robot to the horizontal posture corresponding to the feedback angle $\alpha_1$ again;

step 305', allowing the wall-climbing robot to move backward the set distance S, and recording a current feedback angle $\alpha_3$ of the current inertial measurement unit module;

step 306', calculating a difference between the two angles $\alpha_b = \alpha_3 - \alpha_1$, and taking $\alpha_b$ as an offset angle set for the wall-climbing robot moving backward the distance S; and

step 307', performing automated operation, by the wall-climbing robot, according to the offset angles $\alpha_f$ and $\alpha_b$ measured at two times, with an operation area being S*L*N, where S represents the walking distance of the robot, L represents the set lane changing distance, and N represents the number of lane changing.

Further, the analyzing the steering capability of the wall-climbing robot in step 3 specifically includes:

a rotation speed and a rotation radius of the wall-climbing robot during a steering process are codetermined by movement directions and speeds of driving wheels, and the rotation radius directly determines the lane changing distance of the wall-climbing robot;

when movement directions of two driving wheels are identical, speed directions of wheel sets on two sides are identical, and a rotation center is located on an outer side of the wall-climbing robot; and

when the movement directions of the two driving wheels are opposite, the speed directions of the wheel sets on the two sides are opposite, and the rotation center is located on an inner side of the wall-climbing robot.

Further, when the speed directions of the wheel sets on the two sides are identical, a following formula is obtained:

$$\begin{cases} v_c = \dfrac{v_a + v_b}{2} \\ r = \dfrac{v_a + v_b}{v_a - v_b} \cdot \dfrac{B}{2} \end{cases};$$

when the speed directions of the wheel sets on the two sides are opposite, a following formula is obtained:

$$\begin{cases} v_c = \dfrac{v_a - v_b}{2} \\ r = \dfrac{v_a - v_b}{v_a + v_b} \cdot \dfrac{B}{2} \end{cases};$$

where, a point a, a point b and a point c are centers of the wheel sets on the two sides and the body of the wall-climbing robot, r represents a steering radius of the wall-climbing robot, which is half of the lane changing distance L, $V_a$ and $V_b$ are speeds of the wheel sets on the two sides of the wall-climbing robot, $V_c$ is a speed of the body of the wall-climbing robot, and B is a distance between the point a and the point b.

Further, implementation of lane changing by the wall-climbing robot specifically includes:

calculating the steering radius r of the robot according to the set lane changing distance L, so as to calculate the speeds $V_a$ and $V_b$ of the wheel sets on the two sides of the wall-climbing robot for first steering; and

starting, by the wall-climbing robot, second steering when a rotation angle of the first steering reaches 90 degrees, and rotating 90 degrees again in an opposite direction of the first steering to complete a lane changing action.

Through the embodiments of the present application, the following technical effects can be obtained: compared with the existing path planning, according to the present disclosure, the advantages of Z-shaped (N-shaped) and zigzag path planning are integrated, operation steps for lane changing are reduced, an overlapping region is reduced and the operation efficiency is improved. Above all, the automated operation is realized, and does not rely on the experience of the operator. The tail falling phenomenon is avoided by rotating a certain compensation angle, so that the robot can walk in a horizontal line instead of a previous curve in the horizontal mode, and inside path navigation and automatic lane changing can be better realized.

## Brief Description of the Drawings

In order to more clearly explain the technical solutions in embodiments of the present application, the following will make a brief introduction to the drawings that need to be used in the description of the embodiments or the related art. Obviously, the drawings in the following description are some of embodiments of the present application, and for those skilled in the art, other figures can also be derived from these figures without creative labor.

FIG. 1 is a schematic diagram illustrating a working principle of a robot system.
FIG. 2 is a schematic diagram illustrating several types of movement path planning for a wall-climbing robot.
FIG. 3 is a schematic diagram illustrating a spatial pose model of a wall-climbing robot during a working process.
FIG. 4 is a schematic diagram illustrating stress analysis.
FIG. 5 is a schematic diagram illustrating a path for a robot to start automated operation according to a current angle.
FIG. 6 is a schematic diagram illustrating stress analysis of automated operation of a robot.
FIG. 7 is a schematic diagram illustrating stress analysis of automated operation of a robot after compensation.
FIG. 8 is a schematic diagram illustrating a path of a robot performing automated operation according to an offset angle.
FIG. 9 is a schematic diagram illustrating steering of wheel sets on two sides of a robot.
FIG. 10 is a schematic diagram illustrating lane changing of a robot.

## Detailed Description of Embodiments

In order to make the purposes, technical solutions and advantages of embodiments of the present application clearer, the technical solutions in the embodiments of the present application will be described clearly and completely below in conjunction with the accompanying drawings of the present application. Apparently, the embodiments described are some embodiments of the present application, but not all of embodiments. Based on the embodiments of the present application, all other embodiments obtained by those skilled in the art without involving any creative labor are within the scope of protection of the present application.

Since a traditional robot is controlled by an operator using a wireless remote controller to control the movement, lane changing and straight walking of the robot and the operator is required to continuously operate the robot in the whole operation process of the robot, the time and energy of personnel are greatly consumed and the labor cost is increased. The solution of the present disclosure is used for solving the problems above, and by means of the solution, the robot implements automated operation according to path planning, straight walking and automated lane changing, the operator is freed from frequently operating the remote controller and performing real-time monitoring, and the robot is more intelligent.

A path planning method of the present disclosure includes the following steps.

Step 1, establishing a spatial pose model of a wall-climbing robot during a working process.

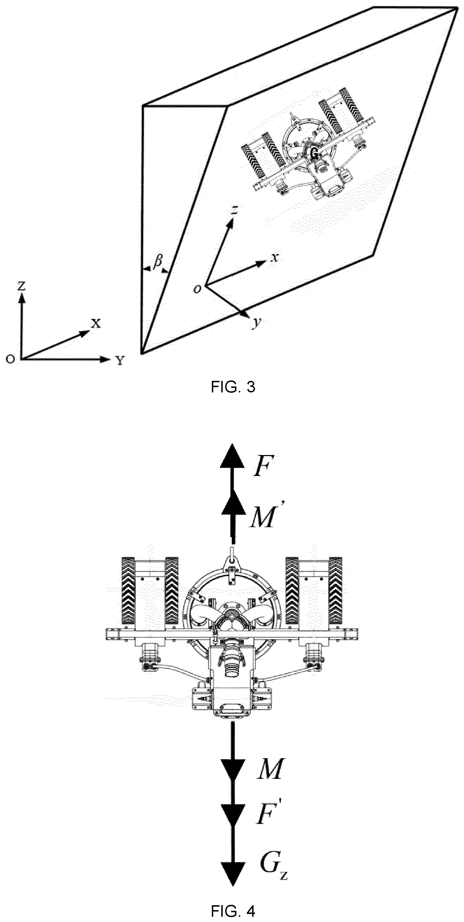

FIG. 3 is a schematic diagram illustrating a spatial pose model of a wall-climbing robot during a working process, where an OXYZ coordinate system is a ground coordinate system and an OXYZ coordinate system is a ship wall surface coordinate system. In FIG. 3, $\beta$ is an included angle between a wall surface of a ship and a vertical plane. According to an actual situation of the wall surface, it can be known that $0 \leq \beta \leq 90$.

Step 2, performing statics analysis on the wall-climbing robot, and decomposing a resultant force G of gravity of the wall-climbing robot and gravity of a load borne by the wall-climbing robot to obtain components as follows:

$$\begin{cases} G_y = G \sin \beta \\ G_z = G \cos \beta \end{cases};$$

where, by analyzing effects of the gravity components in the OXYZ coordinate system, it can be known that $G_z$ in a Z axis direction causes the wall-climbing robot to have a trend of sliding down on the wall surface of the ship, the gravity components $G_Y$ and $G_Z$ and a recoil force of a water jet will also produce an overturning moment, especially in a situation that universal wheel(s) of the robot may face upwards, that is, the magnetic force of the universal wheel(s) may be far less than the magnetic force of driving wheel sets, the wall-climbing robot has a risk of flipping vertically away from the wall surface, so that the posture with the universal wheels facing upwards should be avoided in path planning.

Step 3, performing kinetics analysis on the wall-climbing robot, and analyzing a crawling capability and a steering capability of the wall-climbing robot.

Crawling movement modes of the wall-climbing robot on the wall surface of the ship is divided into a vertical mode and a horizontal mode.

Where, the vertical mode includes vertical upward movement and vertical downward movement, the wall-climbing robot in the vertical upward movement needs to overcome resistance moments in identical directions, that is, a resistance moment caused by the gravity of a body of the robot and the gravity of a load, and a resistance moment caused by friction of the wheel sets; and when the speed is constant, a resistance moment of the wall-climbing robot in the vertical upward movement is greater than a resistance moment in the downward movement.

FIG. 4 is a schematic diagram illustrating stress analysis, where $G_Z$ represents a component of a sum of the gravity of the body of the wall-climbing robot and the gravity of the load borne by the wall-climbing robot along a z axis in the OXYZ coordinate system, M represents a friction force of the wheel sets when the wall-climbing robot moves upwards, M' represents a friction force of the wheel sets when the wall-climbing robot moves downwards, F represents a driving force when the wall-climbing robot moves upwards, and F' represents a driving force when the wall-climbing robot moves downwards.

According to the stress analysis in FIG. 4, in the vertical mode, the wall-climbing robot can walk straight only by keeping a crawling angle unchanged. The wall-climbing robot is equipped with an inertial measurement unit (IMU) module.

The vertical mode is implemented by the following steps:

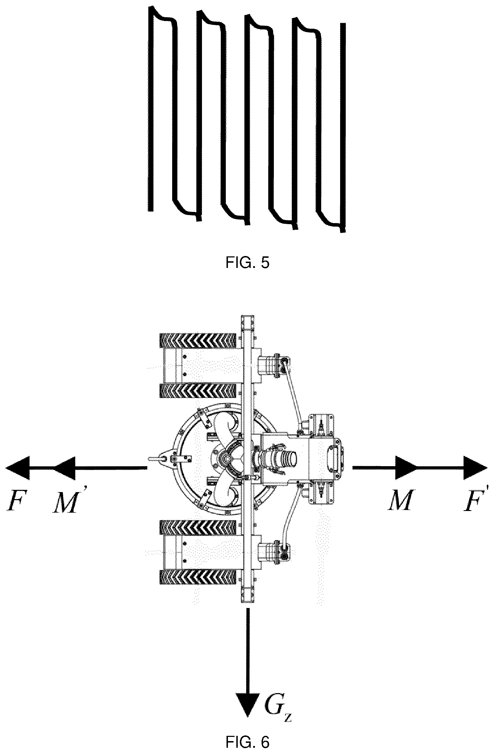

step 301, manually adjusting the wall-climbing robot to a vertical posture, and recording a current feedback angle $\alpha$ of the IMU module; and
step 302, setting a walking distance and a lane changing distance of the wall-climbing robot, and starting, by the wall-climbing robot, automated operation according to the current feedback angle, with a completed operation area being S*L*N; where S represents the walking distance, L represents the set lane changing distance, and N represents a number of lane changing. FIG. 5 is a schematic diagram illustrating a path for a robot to start automated operation according to a current angle.

The horizontal mode includes horizontal forward movement and horizontal backward movement, and in horizontal movement of the wall-climbing robot, the wall-climbing robot needs to overcome resistance moments in two directions, that is, the resistance moment caused by the gravity of the body of the wall-climbing robot and the gravity of the load, and the resistance moment caused by the friction of the wheel sets. FIG. 6 is a schematic diagram illustrating stress analysis of automated operation of a robot, where $G_Z$ represents the component of the sum of the gravity of the body of the wall-climbing robot and the gravity of the load borne by the wall-climbing robot along the z axis in the OXYZ coordinate system, M represents a friction force of the wheel sets when the wall-climbing robot moves forward, M' represents a friction force of the wheel sets when the wall-climbing robot moves backward, F represents a driving force when the wall-climbing robot moves forward, and F' represents a driving force when the wall-climbing robot moves backward.

According to the stress analysis in FIG. 6, in the horizontal mode, due to the influence of the gravity $G_Z$, the robot undergoes a tail falling phenomenon during crawling, and the degree of tail falling when moving forward is different from the degree of tail falling when moving backward. Therefore, an upward force $F_Z$ is needed for compensation to balance the influence of $G_Z$, and the following technical implementation solution is proposed.

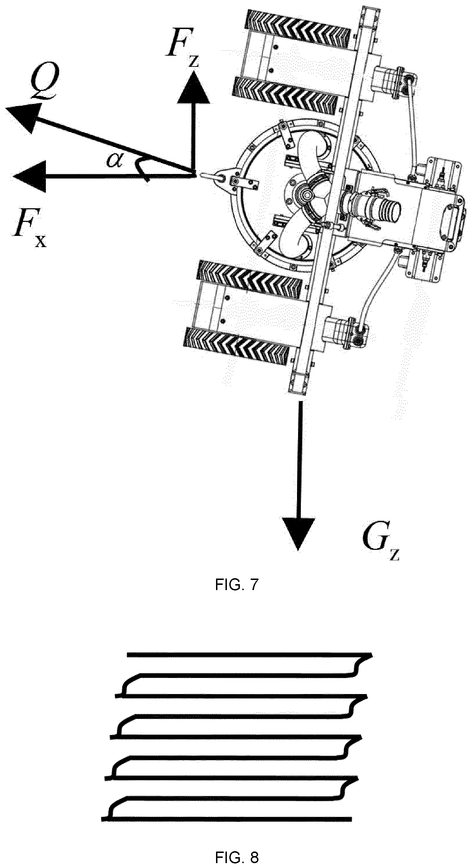

FIG. 7 is a schematic diagram illustrating stress analysis of automated operation of a robot after compensation, where Q represents a resultant force of a driving force and a friction force when the robot moves forward, $F_Z$ represents a component of the resultant force in the z axis direction, $F_X$ represents a component of the resultant force in an x axis direction, and $\alpha$ is a set offset angle.

According to the stress analysis in FIG. 7, a force balance equation of the robot can be listed as follows:

$$\begin{cases} F_z = G_z = Q \sin \alpha \\ F_x = Q \cos \alpha \\ Q = F - M \end{cases}$$

In a practical situation, working conditions of each ship are different, and a value of α is directly influenced by a paint film material, a corrosion degree, marine life and various types of iron rust. Therefore, during an actual operation, it is necessary to measure the value of α in advance.

The horizontal mode is technically implemented by the following steps:

step 301', manually adjusting the wall-climbing robot to a horizontal posture, and recording a current feedback angle $\alpha_1$ of the IMU module;

step 302', allowing the wall-climbing robot to move forward the set walking distance S, and recording a current feedback angle $\alpha_2$ of the IMU module;

step 303', calculating a difference between the two angles $\alpha_f = \alpha_2 - \alpha_1$, and taking $\alpha_f$ as an offset angle set for the wall-climbing robot moving forward the distance S;

step 304', manually adjusting the wall-climbing robot to the horizontal posture corresponding to the feedback angle $\alpha_1$ again;

step 305', allowing the wall-climbing robot to move backward the set distance S, and recording a current feedback angle $\alpha_3$ of the current IMU module;

step 306', calculating a difference between the two angles $\alpha_b = \alpha_3 - \alpha_1$, and taking $\alpha_b$ as an offset angle set for the wall-climbing robot moving backward the distance S; and

step 307', performing automated operation, by the wall-climbing robot, according to the offset angles $\alpha_f$ and $\alpha_b$ measured at two times, with an operation area being S*L*N, where S represents the walking distance of the robot, L represents the set lane changing distance, and N represents the number of lane changing. FIG. 8 is a schematic diagram illustrating a path of a robot performing automated operation according to an offset angle.

When the above solution is realized, the wall-climbing robot is involved in steering movement during a working process, the action is realized by differential motion of driving wheels of the wall-climbing robot, and sideslip occurs when a driving wheel on one side rotate fast and a driving wheel on the other side rotates slowly, so as to perform the steering movement. A rotation speed and a rotation radius of the wall-climbing robot during a steering process are also codetermined by movement directions and speeds of the driving wheels, and the rotation radius directly determines a lane changing distance of the wall-climbing robot. When movement directions of two driving wheels are identical, speed directions of wheel sets on two sides are identical, and a rotation center is located on an outer side of the wall-climbing robot; and when the movement directions of the two driving wheels are opposite, the speed directions of the wheel sets on the two sides are opposite, and the rotation center is located on an inner side of the wall-climbing robot.

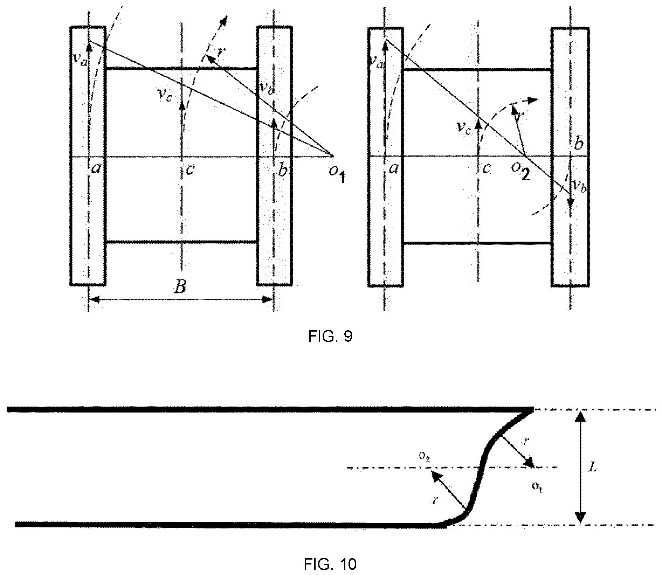

FIG. 9 is a schematic diagram illustrating steering of wheel sets on two sides of a robot. In FIG. 9, a point a, a point b and a point c are centers of the wheel sets on two sides and the body of the robot respectively, with $O_1$ representing a center of first steering of the robot and $O_2$ representing a center of second steering of the robot. As shown in the left part of FIG. 9, when the speed directions of the wheel sets on the two sides are identical, the following formula is obtained:

$$\begin{cases} v_c = \dfrac{v_a + v_b}{2} \\ r = \dfrac{v_a + v_b}{v_a - v_b} \cdot \dfrac{B}{2} \end{cases};$$

when the speed directions of the wheel sets on the two sides are opposite, the following formula is obtained:

$$\begin{cases} v_c = \dfrac{v_a - v_b}{2} \\ r = \dfrac{v_a - v_b}{v_a + v_b} \cdot \dfrac{B}{2} \end{cases};$$

where, the point a, the point b and the point c are the centers of the wheel sets on the two sides and the body of the wall-climbing robot, r represents a steering radius of the wall-climbing robot, which is half of the lane changing distance L, $V_a$ and $V_b$ are speeds of the wheel sets on the two sides of the wall-climbing robot, $V_c$ is a speed of the body of the wall-climbing robot, and B is a distance between the point a and the point b.

FIG. 10 is a schematic diagram illustrating lane changing of a robot. The implementation of lane changing by the wall-climbing robot specifically includes:

calculating the steering radius r of the robot according to the set lane changing distance L, so as to calculate the speeds $V_a$ and $V_b$ of the wheel sets on the two sides of the wall-climbing robot for first steering; and
starting, by the wall-climbing robot, second steering when a rotation angle of the first steering reaches 90 degrees, and rotating 90 degrees again in an opposite direction of the first steering to complete a lane changing action.

According to the present disclosure, the advantages of Z-shaped (N-shaped) and zigzag path planning are integrated, operation steps for lane changing are reduced, an overlapping region is reduced and the operation efficiency is improved. Above all, the automated operation is realized, and does not rely on the experience of the operator. The tail falling phenomenon is avoided by rotating a certain compensation angle, so that the robot can walk in a horizontal line instead of a previous curve in the horizontal mode, and inside path navigation and automatic lane changing can be better realized.

**Claims**

1. A path planning method for a wall-climbing robot, the method comprises following steps:

step 1, establishing a spatial pose model of a wall-climbing robot during a working process;
step 2, performing statics analysis on the wall-climbing robot, and decomposing a resultant force G of gravity of the wall-climbing robot itself and gravity of a load borne by the wall-climbing robot;
step 3, performing kinetics analysis on the wall-climbing robot, and analyzing a crawling capability and a steering capability of the wall-climbing robot; and
step 4, performing path planning according to analysis results of the crawling capability and the steering capability;
**characterized in that** the analyzing the steering capability of the wall-climbing robot in step 3 specifically comprises:

codetermining a rotation speed and a rotation radius of the wall-climbing robot during a steering process by movement directions and speeds of driving wheels, wherein the rotation radius directly determines a lane changing distance of the wall-climbing robot;
when movement directions of two driving wheels are identical, speed directions of wheel sets on two sides are identical, and a rotation center is located on an outer side of the wall-climbing robot;
when the movement directions of the two driving wheels are opposite, the speed directions of the wheel sets on the two sides are opposite, and the rotation center is located on an inner side of the wall-climbing robot;
when the speed directions of the wheel sets on the two sides are identical, a following formula is obtained:

$$\begin{cases} v_c = \dfrac{v_a + v_b}{2} \\ r = \dfrac{v_a + v_b}{v_a - v_b} \cdot \dfrac{B}{2} \end{cases};$$

when the speed directions of the wheel sets on the two sides are opposite, a following formula is obtained:

$$\begin{cases} v_c = \dfrac{v_a - v_b}{2} \\ r = \dfrac{v_a - v_b}{v_a + v_b} \cdot \dfrac{B}{2} \end{cases};$$

wherein, a point a, a point b and a point c are centers of the wheel sets on the two sides and a body of the wall-climbing robot, r represents a steering radius of the wall-climbing robot, which is half of the lane changing distance L, $V_a$ and $V_b$ are speeds of the wheel sets on the two sides of the wall-climbing robot, $V_c$ is a speed of the body of the wall-climbing robot, and B is a distance between the point a and the point b;

wherein implementation of lane changing by the wall-climbing robot specifically comprises:

calculating the steering radius r of the robot according to the set lane changing distance L, so as to calculate the speeds $V_a$ and $V_b$ of the wheel sets on the two sides of the wall-climbing robot for first steering; and

starting, by the wall-climbing robot, second steering when a rotation angle of the first steering reaches 90 degrees, and rotating 90 degrees again in an opposite direction of the first steering to complete a lane changing action;

wherein the analyzing the crawling capability of the wall-climbing robot in step 3 specifically comprises: dividing crawling movement modes of the wall-climbing robot on a wall surface of a ship into a vertical mode and a horizontal mode;

wherein the vertical mode is implemented by following steps:

step 301, manually adjusting the wall-climbing robot to a vertical posture, and recording a current feedback angle $\alpha$ of an inertial measurement unit module; and

step 302, setting a walking distance and the lane changing distance of the wall-climbing robot, and starting, by the wall-climbing robot, automated operation according to the current feedback angle, with a completed operation area being S*L*N, where S represents the walking distance, L represents the set lane changing distance, and N represents a number of lane changing;

wherein the horizontal mode is technically implemented by following steps:

step 301', manually adjusting the wall-climbing robot to a horizontal posture, and recording a current feedback angle $\alpha_1$ of the inertial measurement unit module;

step 302', allowing the wall-climbing robot to move forward the set walking distance S, and recording a current feedback angle $\alpha_2$ of the inertial measurement unit module;

step 303', calculating a difference between the two angles $\alpha_f = \alpha_2 - \alpha_1$, and taking $\alpha_f$ as an offset angle set for the wall-climbing robot moving forward the distance S;

step 304', manually adjusting the wall-climbing robot to the horizontal posture corresponding to the feedback angle $\alpha_1$ again;

step 305', allowing the wall-climbing robot to move backward the set distance S, and recording a current feedback angle $\alpha_3$ of the current inertial measurement unit module;

step 306', calculating a difference between the two angles $\alpha_b = \alpha_3 - \alpha_1$, and taking $\alpha_b$ as an offset angle set for the wall-climbing robot moving backward the distance S; and

step 307', performing automated operation, by the wall-climbing robot, according to the offset angles $\alpha_f$ and $\alpha_b$ measured at two times, with an operation area being S*L*N, where S represents the walking distance of the robot, L represents the set lane changing distance, and N represents the number of lane changing.

2. The method of claim 1, wherein the vertical mode comprises vertical upward movement and vertical downward movement; the wall-climbing robot in the vertical upward movement needs to overcome a resistance moment caused by the gravity of the body and the gravity of the load of the robot and a resistance moment caused by friction of the wheel sets; and when the speed is constant, a resistance moment of the wall-climbing robot in the vertical upward movement is greater than a resistance moment in the downward movement.

3. The method of claim 1, wherein the horizontal mode comprises horizontal forward movement and horizontal backward movement; and in horizontal movement of the wall-climbing robot, the wall-climbing robot needs to overcome a resistance moment caused by the gravity of the body and the gravity of the load of the wall-climbing robot and a resistance moment caused by friction of the wheel sets.

4. The method of claim 1, wherein in the horizontal mode, due to an influence of gravity $G_Z$, an upward force $F_Z$ is needed for compensation; and

in the horizontal mode, a force balance equation of the wall-climbing robot is as follows:

$$\begin{cases} F_z = G_z = Q\sin\alpha \\ F_x = Q\cos\alpha \\ Q = F - M \end{cases} ;$$

where Q represents a resultant force of a driving force and a friction force when the robot moves forward, $F_Z$ represents a component of the resultant force in a z axis direction, $F_X$ represents a component of the resultant force in an x axis direction, a is a set offset angle, M represents a friction force of the wheel set when the wall-climbing robot moves forward, and F represents a driving force when the wall-climbing robot moves forward.

**Patentansprüche**

1. Eine Wegplanungsmethode für einen Wandkletterroboter, die Methode umfassend folgende Schritte:

Schritt 1, Erstellen eines räumlichen Posemodells eines Wandkletterroboters während eines Arbeitsprozesses;
Schritt 2, Durchführen einer statischen Analyse am Wandkletterroboter und Zerlegung einer resultierenden Kraft G der Schwerkraft des Wandkletterroboters selbst und der Schwerkraft einer von dem Wandkletterroboter getragenen Last;
Schritt 3, Durchführen einer Kinetikanalyse am Wandkletterroboter und Analysieren einer Kriechfähigkeit und einer Lenkfähigkeit des Wandkletterroboters; und
Schritt 4, Durchführen der Wegplanung gemäß den Analyseergebnissen der Kriechfähigkeit und der Lenkfähigkeit;
**dadurch gekennzeichnet, dass** die Analyse der Lenkfähigkeit des Wandkletterroboters in Schritt 3 insbesondere umfasst:

Mitbestimmen einer Drehgeschwindigkeit und eines Drehradius des Wandkletterroboters während eines Lenkvorgangs durch Bewegungsrichtungen und Geschwindigkeiten von Antriebsrädern, wobei der Drehradius direkt einen Spurwechselabstand des Wandkletterroboters bestimmt;
wenn die Bewegungsrichtungen zweier Antriebsräder identisch sind, die Geschwindigkeitsrichtungen der Radsätze auf zwei Seiten identisch sind und sich ein Drehpunkt auf einer Außenseite des Wandkletterroboters befindet;
wenn sich die Bewegungsrichtungen der beiden Antriebsräder gegenüberliegen, die Geschwindigkeitsrichtungen der Radsätze auf beiden Seiten gegenüberliegen und sich der Drehpunkt auf einer Innenseite des Wandkletterroboters befindet;
Wenn die Geschwindigkeitsrichtungen der Radsätze auf beiden Seiten identisch sind, ergibt sich folgende Formel:

$$\begin{cases} v_c = \dfrac{v_a + v_b}{2} \\ r = \dfrac{v_a + v_b}{v_a - v_b} \cdot \dfrac{B}{2} \end{cases};$$

wenn sich die Geschwindigkeitsrichtungen der Radsätze auf beiden Seiten gegenüberliegen, ergibt sich folgende Formel:

$$\begin{cases} v_c = \dfrac{v_a - v_b}{2} \\ r = \dfrac{v_a - v_b}{v_a + v_b} \cdot \dfrac{B}{2} \end{cases};$$

wobei ein Punkt a, ein Punkt b und ein Punkt c Mittelpunkte der Radsätze auf den beiden Seiten und ein Körper des Wandkletterroboters sind, r einen Lenkradius des Wandkletterroboters darstellt, die der Hälfte des Spurwechselabstands entspricht L, $V_a$ und $V_b$ Geschwindigkeiten der Radsätze auf beiden Seiten des Wandkletterroboters ist, $V_c$ eine Geschwindigkeit des Körpers des Wandkletterroboters ist und B ein Abstand zwischen dem Punkt a und dem Punkt b ist;
wobei die Implementierung eines Spurwechsels durch den Wandkletterroboter insbesondere umfasst:

Berechnen des Lenkradius r des Roboters entsprechend dem eingestellten Spurwechselabstand L, um die Geschwindigkeiten $V_a$ und $V_b$ der Radsätze auf den beiden Seiten des Wandkletterroboters für das erste Lenken zu berechnen; und
Starten des zweiten Lenkens durch den Wandkletterroboter, wenn ein Drehwinkel der ersten Lenkung 90 Grad erreicht, und erneutes Drehen um 90 Grad in eine entgegengesetzte Richtung der ersten Lenkung, um einen Spurwechselvorgang abzuschließen;
wobei die Analyse der Kriechfähigkeit des Wandkletterroboters in Schritt 3 insbesondere umfasst:
Unterteilen von Kriechbewegungsmodi des Wandkletterroboters auf einer Wandfläche eines Schiffes in einen vertikalen Modus und einen horizontalen Modus;
wobei der vertikale Modus durch folgende Schritte umgesetzt wird:

Schritt 301, manuelles Anpassen des Wandkletterroboters in eine vertikale Haltung und Aufzeichnen eines aktuellen Rückkopplungswinkels a eines Trägheitsmesseinheitsmoduls; und
Schritt 302, Einstellen einer Laufstrecke und der Spurwechselstrecke des Wandkletterroboters und Starten, durch den Wandkletterroboter, des automatisierten Betriebs entsprechend dem aktuellen Rückkopplungswinkel, wobei ein abgeschlossener Betriebsbereich S*L*N ist, wobei S die Laufstrecke und L die eingestellte Spurwechselstrecke darstellt, und N für eine Anzahl von Spurwechseln steht;
wobei der horizontale Modus technisch durch folgende Schritte umgesetzt wird:

Schritt 301', manuelles Anpassen des Wandkletterroboters in eine horizontale Haltung und das Aufzeichnen eines aktuellen Rückkopplungswinkels $\alpha_1$ des Trägheitsmesseinheits-moduls;
Schritt 302', der es dem Wandkletterroboter ermöglicht, die eingestellte Laufstrecke S vorwärts zu bewegen, und einen aktuellen Rückkopplungswinkel $\alpha_2$ des Trägheitsmes-seinheitsmoduls aufzeichnet;
Schritt 303', wobei eine Differenz zwischen den beiden Winkeln $\alpha_f = \alpha_2 - \alpha_1$ berechnet wird und $\alpha_f$ als ein eingestellter Versatzwinkel für den Wandkletterroboter verwendet wird, der sich um den Abstand S vorwärts bewegt;

Schritt 304', manuelles Anpassen des Wandkletterroboters in die dem Rückkopplungswinkel $\alpha_1$ entsprechende horizontale Haltung;

Schritt 305', der es dem Wandkletterroboter ermöglicht, sich um den eingestellten Abstand S rückwärts zu bewegen, und einen aktuellen Rückkopplungswinkel $\alpha_3$ des aktuellen Trägheitsmesseinheitsmoduls aufzeichnet;

Schritt 306', das Berechnen einer Differenz zwischen den beiden Winkeln $\alpha_b = \alpha_3 - \alpha_1$ und das Annehmen von $\alpha_b$ als ein eingestellter Versatzwinkel für den Wandkletterroboter, der sich um den Abstand S rückwärts bewegt; und

Schritt 307', Durchführen eines automatisierten Betriebs durch den Wandkletterroboter, entsprechend den zweimal gemessenen Versatzwinkeln $\alpha_f$ und $\alpha_b$. wobei ein Betriebsbereich S\*L\*N ist, wobei S die Laufstrecke des Roboters, L die eingestellte Spurwechselstrecke und N die Anzahl der Spurwechsel darstellt.

2. Verfahren nach Anspruch 1, wobei der vertikale Modus eine vertikale Aufwärtsbewegung und eine vertikale Abwärtsbewegung umfasst; der Wandkletterroboter muss in der vertikalen Aufwärtsbewegung ein Widerstandsmoment überwinden, das durch die Schwerkraft des Körpers und die Schwerkraft der Last des Roboters und ein Widerstandsmoment, das durch Reibung der Radsätze verursacht wird, verursacht wird; und bei konstanter Geschwindigkeit ist ein Widerstandsmoment des Wandkletterroboters in der vertikalen Aufwärtsbewegung größer als ein Widerstandsmoment in der Abwärtsbewegung.

3. Verfahren nach Anspruch 1, wobei der horizontale Modus eine horizontale Vorwärtsbewegung und eine horizontale Rückwärtsbewegung umfasst; und in der horizontalen Bewegung des Wandkletterroboters muss der Wandkletterroboter ein Widerstandsmoment überwinden, das durch die Schwerkraft des Körpers und die Schwerkraft der Last des Wandkletterroboters und ein Widerstandsmoment durch Reibung der Radsätze verursacht wird.

4. Verfahren nach Anspruch 1, wobei im horizontalen Modus aufgrund eines Einflusses der Schwerkraft $G_z$ eine Aufwärtskraft $F_z$ zur Kompensation erforderlich ist; und

im horizontalen Modus lautet die Gleichung für das Kräftegleichgewicht des an der Wand kletternden Roboters wie folgt:

$$\begin{cases} F_z = G_z = Q \sin\alpha \\ F_x = Q \cos\alpha \\ Q = F - M \end{cases};$$

wobei Q eine resultierende Kraft einer Antriebskraft und eine Reibekraft beim Vorwärtsbewegen des Roboters darstellt, $F_z$ eine Komponente der resultierenden Kraft in z-Richtung, $F_x$ eine Komponente der resultierenden Kraft in x-Richtung, $\alpha$ ein eingestellter Versatzwinkel, M eine Reibekraft des Radsatzes beim Vorwärtsbewegen des Wandkletterroboters und F eine Antriebskraft beim Vorwärtsbewegen des Wandkletterroboters darstellt.

**Revendications**

1. Procédé de planification de trajet pour un robot d'escalade de paroi, le procédé comprend les étapes suivantes :

étape 1, l'établissement d'un modèle de pose spatiale d'un robot d'escalade de paroi pendant un processus de travail ;

étape 2, la réalisation d'une analyse statique sur le robot d'escalade de paroi, et la décomposition d'une force résultante G de la pesanteur du robot d'escalade de paroi lui-même et de la pesanteur d'une charge portée par le robot d'escalade de paroi ;

étape 3, la réalisation d'une analyse cinétique sur le robot d'escalade de paroi, et l'analyse d'une capacité de rampement et une capacité de braquage du robot d'escalade de paroi ; et

étape 4, la réalisation d'une planification de trajet selon les résultats d'analyse de la capacité de rampement et de la capacité de braquage ;

**caractérisé en ce que** l'analyse de la capacité de braquage du robot d'escalade de paroi à l'étape 3 comprend spécifiquement :

la détermination conjointe d'une vitesse de rotation et d'un rayon de rotation du robot d'escalade de paroi pendant un processus de braquage par des directions et des vitesses de mouvement de roues motrices, dans lequel le rayon de rotation détermine directement une distance de changement de voie du robot d'escalade de paroi ;

lorsque des directions de mouvement de deux roues motrices sont identiques, des directions de vitesse de trains de roues sur deux côtés sont identiques, et un centre de rotation est situé sur un côté externe du robot d'escalade de paroi ;

lorsque les directions de mouvement des deux roues motrices sont opposées, les directions de vitesse des trains de roues sur les deux côtés sont opposées, et le centre de rotation est situé sur un côté interne du robot d'escalade de paroi ;

lorsque les directions de vitesse des trains de roues sur les deux côtés sont identiques, une formule suivante est obtenue :

$$\begin{cases} v_c = \dfrac{v_a + v_b}{2} \\[2mm] r = \dfrac{v_a + v_b}{v_a - v_b} \cdot \dfrac{B}{2} \end{cases} ;$$

lorsque les directions de vitesse des trains de roues sur les deux côtés sont opposées, une formule suivante est obtenue :

$$\begin{cases} v_c = \dfrac{v_a - v_b}{2} \\[2mm] r = \dfrac{v_a - v_b}{v_a + v_b} \cdot \dfrac{B}{2} \end{cases} ;$$

dans lesquelles, un point a, un point b et un point c sont des centres des trains de roues sur les deux côtés et d'un corps du robot d'escalade de paroi, r représente un rayon de braquage du robot d'escalade de paroi, qui est la moitié de la distance de changement de voie L, $V_a$ et $V_b$ sont des vitesses des trains de roues sur les deux côtés du robot d'escalade de paroi, $V_c$ est une vitesse du corps du robot d'escalade de paroi, et B est une distance entre le point a et le point b ;

dans lequel la mise en œuvre d'un changement de voie par le robot d'escalade de paroi comprend spécifiquement :

le calcul du rayon de braquage r du robot selon la distance de changement de voie L établie, de façon à calculer les vitesses $V_a$ et $V_b$ des trains de roues sur les deux côtés du robot d'escalade de paroi pour un premier braquage ; et

le démarrage, par le robot d'escalade de paroi, d'un second braquage lorsqu'un angle de rotation du premier braquage atteint 90 degrés, et la rotation de 90 degrés à nouveau dans une direction opposée au premier braquage pour achever une action de changement de voie ;

dans lequel l'analyse de la capacité de rampement du robot d'escalade de paroi à l'étape 3 comprend spécifiquement :

la division de modes de mouvement de rampement du robot d'escalade de paroi sur une surface de paroi d'un navire en un mode vertical et un mode horizontal ;

dans lequel le mode vertical est mis en œuvre par les étapes suivantes :

étape 301, le réglage manuel du robot d'escalade de paroi dans une posture verticale, et l'enregistrement d'un angle de rétroaction actuel $\alpha$ d'un module d'unité de mesure inertielle ; et

étape 302, l'établissement d'une distance de marche et de la distance de changement de voie du robot d'escalade de paroi, et le démarrage, par le robot d'escalade de paroi, d'une opération automatisée selon l'angle de rétroaction actuel, une aire d'opération achevée étant S*L*N, où S représente la distance de marche, L représente la distance de changement de voie établie, et N représente un nombre de changements de voie ;

dans lequel le mode horizontal est techniquement mis en œuvre par les étapes suivantes :

étape 301', le réglage manuel du robot d'escalade de paroi dans une posture horizontale, et l'enregistrement d'un angle de rétroaction actuel $\alpha_1$ du module d'unité de mesure inertielle ;

étape 302', le fait de permettre au robot d'escalade de paroi de se déplacer vers l'avant sur la distance de marche S établie, et l'enregistrement d'un angle de rétroaction actuel $\alpha_2$ du module d'unité de mesure inertielle ;

étape 303', le calcul d'une différence entre les deux angles $\alpha_f = \alpha_2 - \alpha_1$, et la prise de $\alpha_f$ comme étant un angle de décalage établi pour le robot d'escalade de paroi se déplaçant vers l'avant sur la distance S ;

étape 304', le réglage manuel du robot d'escalade de paroi dans la posture horizontale correspondant à l'angle de rétroaction $\alpha_1$ à nouveau ;

étape 305', le fait de permettre au robot d'escalade de paroi de se déplacer vers l'arrière sur la distance S établie, et l'enregistrement d'un angle de rétroaction actuel $\alpha_3$ du module d'unité de mesure inertielle actuel ;

étape 306', le calcul d'une différence entre les deux angles $\alpha_b = \alpha_3 - \alpha_1$, et la prise de $\alpha_b$ comme étant un angle de décalage établi pour le robot d'escalade de paroi se déplaçant vers l'arrière sur la distance S ; et

étape 307', la réalisation d'une opération automatisée, par le robot d'escalade de paroi, selon les angles de décalage $\alpha_f$ et $\alpha_b$ mesurés à deux instants, une aire d'opération étant S*L*N, où S représente la distance de marche du robot, L représente la distance de changement de voie établie et N représente le nombre de changements de voie.

2. Procédé selon la revendication 1, dans lequel le mode vertical comprend un mouvement vertical vers le haut et un mouvement vertical vers le bas ; le robot d'escalade de paroi dans le mouvement vertical vers le haut doit surmonter un moment de résistance provoqué par la pesanteur du corps et la pesanteur de la charge du robot et un moment de résistance provoqué par la friction des trains de roues ; et lorsque la vitesse est constante, un moment de résistance du robot d'escalade de paroi dans le mouvement vertical vers le haut est supérieur à un moment de résistance dans le mouvement vers le bas.

3. Procédé selon la revendication 1, dans lequel le mode horizontal comprend un mouvement horizontal vers l'avant et un mouvement horizontal vers l'arrière ; et dans un mouvement horizontal du robot d'escalade de paroi, le robot d'escalade de paroi doit surmonter un moment de résistance provoqué par la pesanteur du corps et la pesanteur de la charge du robot d'escalade de paroi et un moment de résistance provoqué par la friction des trains de roues.

4. Procédé selon la revendication 1, dans lequel dans le mode horizontal, en raison d'une influence de la pesanteur $G_z$, une force vers le haut $F_z$ est nécessaire en compensation ; et

dans le mode horizontal, une équation d'équilibre des forces du robot d'escalade de paroi est comme suit :

$$\begin{cases} F_z = G_z = Q \sin \alpha \\ F_x = Q \cos \alpha \\ Q = F - M \end{cases} \quad ;$$

où Q représente une force résultante d'une force motrice et d'une force de friction lorsque le robot se déplace vers l'avant, $F_z$ représente une composante de la force résultante dans une direction d'axe z, $F_x$ représente une composante de la force résultante dans une direction d'axe x, $\alpha$ est un angle de décalage établi, M représente une force de friction du train de roues lorsque le robot d'escalade de paroi se déplace vers l'avant, et F représente une force motrice lorsque le robot d'escalade de paroi se déplace vers l'avant.

Sucking clear water

High-pressure pump set

Vacuum recycling

Wall-climbing robot

High-pressure water

Control cable

Discharging clear water

Recycling pipe

FIG. 1

(a) straight     (b) N-shaped (Z-shaped)     (c) zigzag

FIG. 2

FIG. 3

FIG. 4

FIG. 5

FIG. 6

FIG. 7

FIG. 8

FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100030378 A1
- US 20130024067 A1
- CN 204772513 U